# FASCICULE DE BREVET EUROPEEN

(11) **EP 3 410 903 B1**
(45) Date de publication et mention de la délivrance du brevet: **04.12.2019**
(21) Numéro de dépôt: 17707622.1
(22) Date de dépôt: 02.02.2017
(51) Int. Cl.: A47J 31/40, A47J 31/36

(54) **MACHINE DE DISTRIBUTION DE BOISSONS AVEC UN RÉCEPTACLE DE POD PIVOTANT MUNIE D'UN DISPOSITIF DE DÉPLACEMENT D'AIGUILLES DE DISTRIBUTION**
GETRÄNKEAUSGABEMASCHINE MIT SCHWENKBAREM KAPSELBEHÄLTER MIT EINER VORRICHTUNG ZUM BEWEGEN DER ABGABENADELN
BEVERAGE DISPENSING MACHINE HAVING A PIVOTING POD RECEPTACLE PROVIDED WITH A DEVICE FOR MOVING DISPENSING NEEDLES

(30) Priorité: 04.02.2016 FR 1650910
(43) Date de publication de la demande: 12.12.2018
(73) Titulaire: SEB S.A., 69130 Ecully (FR)
(72) Inventeur: DOS SANTOS, Quentin, 21000 Dijon (FR); RIVA, Arnaud, 21000 Dijon (FR); BRIERE, Matthieu, 21120 Gemeaux (FR)
(74) Mandataire: Bourrières, Patrice
(86) Numéro de dépôt international: PCT/FR2017/050240
(87) Numéro de publication internationale: WO 2017/134393

(56) Documents cités:
- WO-A1-2015/132203
- US-A1- 2014 360 327

## Description

### Domaine technique

La présente invention concerne une machine de distribution de boissons à partir d'un pod et a pour objectif principal de faciliter la manipulation de la machine et la perforation du pod par des aiguilles de distribution de fluides, lors de la préparation d'une boisson.

On entend par « pod » une capsule qui comprend une ou plusieurs chambres contenant chacune un ingrédient entrant dans la composition de la boisson, ces ingrédients étant destinés à être mélangés avec de l'eau lors de la préparation de la boisson.

Dans une réalisation particulière, et non limitative, le pod est constitué d'une capsule comprenant une ou plusieurs chambres de stockage contenant chacune un ingrédient, notamment liquide, un canal permettant la distribution d'eau, et une chambre de mélange. Le pod est configuré pour séparer la chambre de mélange de l'au moins une chambre de stockage et du canal, dans un mode initial, et pour faire communiquer la chambre de mélange avec l'au moins une chambre et avec le canal, dans un mode de préparation de la boisson. En outre, la machine comprend des moyens d'injection d'air et des moyens d'injection d'eau, configurés pour perforer le pod et pour injecter de l'air et de l'eau respectivement dans l'au moins une chambre de stockage et dans le canal, dans le mode de préparation de la boisson. Dans ce mode de préparation, l'air injecté dans l'au moins une chambre de stockage pousse l'au moins un ingrédient dans la chambre de mélange et, concomitamment, l'eau injectée dans le canal est transférée dans ladite chambre de mélange, ce qui permet le mélange du ou des ingrédients avec l'eau avant le déversement de la boisson dans un récipient, par exemple un verre ou un gobelet.

### Etat de la technique

Il est connu les demandes de brevet ou brevets publiés sous les numéros US20140360327, GB1051012, WO2013119543 et EP1996051 qui divulguent des machines de distribution de boissons à partir d'un pod.

Selon cet art antérieur, la machine de distribution de boissons comprend un châssis, un réceptacle comportant une zone de réception du pod, un support d'aiguilles de distribution de fluides et un système de déplacement du support d'aiguilles d'une position dégagée du pod à une position engagée sur le pod.

Dans le document GB1051012, le système de déplacement du support d'aiguilles est mis en œuvre soit par des bielles assurant une translation circulaire du support d'aiguilles soit par des moyens de guidage en translation verticale du support d'aiguilles. Dans le document WO2013119543, le système de déplacement du support d'aiguilles est mis en œuvre par un mécanisme à bielles et à liaisons glissières assurant une translation du support d'aiguilles par rapport au réceptacle du pod. Dans le document EP1996051, le système de déplacement du support d'aiguilles est mis en œuvre par un mécanisme à liaisons pivots et à liaisons glissières assurant un basculement combiné du réceptacle et du support d'aiguilles, de la position dégagée vers la position engagée, et inversement.

### Résumé de l'invention

La présente invention a pour objectif de mettre en œuvre une machine de distribution de boissons à partir d'un pod présentant les caractéristiques précitées de l'art antérieur, avec un système de déplacement du support d'aiguilles de conception optimisée assurant un perforation convenable du pod, et facile d'utilisation.

A cet effet, outre les caractéristiques précitées que l'on retrouve sur les machines de distribution déjà connues, le système de déplacement de la machine de distribution selon l'invention comprend un organe de manœuvre monté en rotation selon un axe vertical sur le châssis. Cet organe de manœuvre comporte un corps muni d'au moins une rampe hélicoïdale qui coopère avec au moins un pion assujetti à un piston. Le piston est lui-même assujetti au support d'aiguilles et monté en translation selon l'axe vertical. En outre, l'au moins une rampe hélicoïdale comporte au moins deux zones de pentes différentes configurées pour correspondre respectivement à une zone d'approche des aiguilles au contact du pod et à une zone de travail où les aiguilles sont engagées sur le pod. Cette conception permet à l'utilisateur d'engager le support d'aiguilles sur le pod en tournant simplement l'organe de manœuvre. La zone d'approche présente une pente plus prononcée que celle de la zone de travail, ce qui permet de descendre rapidement le support d'aiguilles pour le mettre au contact du pod, sans effort important et avec une rotation limitée de l'organe de manœuvre durant cette phase d'approche, puis d'engager plus lentement le pod avec le moindre effort et en conservant le maximum de rotation de l'organe de manœuvre durant cette phase de travail.

De préférence, l'organe de manœuvre comporte une molette assujettie au corps. Cette molette permet une prise en main convenable tout en réduisant l'effort à exercer pour actionner le corps du système de déplacement.

Avantageusement, la zone de travail est configurée pour comporter une première phase de pénétration des aiguilles dans le pod et une seconde phase de mise en étanchéité du pod au moyen d'un joint d'étanchéité agencé sur le support d'aiguilles. La pente de la rampe est optimisée afin de garantir un bon compromis entre l'effort de perçage et l'effort d'activation du pod dans la phase de pénétration, puis une compression convenable du joint d'étanchéité entre le pod et le support d'aiguilles dans la phase de mise en étanchéité. De préférence, le joint d'étanchéité est surfacique sur le support d'aiguilles, lesdites aiguilles passant au travers du joint d'étanchéité. Cela permet de supprimer toute prise d'air entre le pod et le support d'aiguilles, afin de garantir un cycle de préparation de la boisson convenable.

De préférence, l'au moins une rampe comprend deux excroissances d'arrêt aux positions extrêmes de rotation de l'organe de manœuvre. Cela permet de maintenir correctement le support d'aiguilles en position dégagée et en position engagée.

Avantageusement, l'au moins une rampe est configurée pour que le déplacement du support d'aiguilles de la position dégagée à la position engagée, et inversement, s'effectue en tournant l'organe de manœuvre d'un angle compris entre 50° et 90°, de préférence 65°. Cela permet de garantir une fluidité du mouvement du poignet pour l'utilisateur qui peut ainsi engager le support d'aiguilles sur le pod en effectuant un mouvement naturel, sans effort important.

Dans une réalisation de la machine, le corps comprend trois rampes uniformément réparties, ce qui garantit une bonne répartition des efforts durant la phase de travail. On peut toutefois envisager un nombre de rampes différent.

Dans une réalisation de la machine, le système de déplacement comprend des moyens d'assistance à la descente du piston, ce qui permet de réduire les efforts durant la manipulation de l'organe de manœuvre. De préférence, ces moyens d'assistance à la descente du piston comportent un ressort.

De préférence, la machine comprend un système de détection de la position engagée des aiguilles sur le pod. Dans une réalisation, le système de détection de la position engagée des aiguilles sur le pod comporte un interrupteur. Ce système de détection permet de garantir un démarrage du cycle de préparation de la boisson seulement lorsque le support d'aiguilles est engagé convenablement sur le pod.

De préférence, les aiguilles présentent chacune un affûtage à trois pentes. Cela permet d'avoir un meilleur compromis entre l'effort de perçage et la course de perçage.

Dans une réalisation de la machine, les aiguilles présentent au moins deux longueurs différentes. Cela permet de séquencer les efforts de perçage exercés par les aiguilles durant la manœuvre du support d'aiguilles.

De préférence, la machine comprend des moyens de butée sur le pod en position fermée du réceptacle vis-à-vis du châssis, configurés pour garantir le maintien du pod en position dans le réceptacle durant le dégagement des aiguilles. Durant la remontée du support d'aiguilles, après la préparation de la boisson, il est possible que le pod reste collé audit support d'aiguilles ; les moyens de butée permettent de décoller le pod pour le faire retomber dans la zone de réception du réceptacle, ce qui évite que le pod remonte avec le support d'aiguilles et bloque l'ouverture du réceptacle.

Avantageusement, la machine comprend un dispositif d'ouverture/fermeture agencé entre le châssis et le réceptacle pour pivoter le réceptacle selon un axe vertical entre une position fermée permettant la distribution et une position ouverte permettant l'accès audit réceptacle, et un système de verrouillage/déverrouillage configuré pour maintenir le réceptacle en position fermée vis-à-vis du châssis et, inversement, pour libérer le réceptacle de sorte à permettre son pivotement en position ouverte.

En outre, la machine comprend un système de désactivation du système de verrouillage/déverrouillage configuré pour empêcher l'activation dudit système de verrouillage/déverrouillage tant que le système de déplacement du support d'aiguilles est en position engagée sur le pod. Cela évite la détérioration de la machine.

En outre, la machine comprend un système de blocage du système de déplacement configuré pour maintenir le support d'aiguilles en position dégagée du pod tant que le réceptacle n'est pas revenu en position fermée. Cela évite également la détérioration de la machine.

De préférence, la machine comprend des moyens de reprise des efforts agencés entre le châssis et le réceptacle, configurés pour stabiliser le réceptacle en cours de fonctionnement de la machine, notamment durant la perforation du pod.

### Brève description des figures

La description suivante met en évidence les caractéristiques et avantages de la machine de distribution de boissons objet de l'invention, selon une conception préférentielle et non limitative. Cette description s'appuie sur des figures, parmi lesquelles :
- les figures 1 et 2 illustrent deux vues d'ensemble d'une partie de la machine de distribution comportant les caractéristiques essentielles en rapport avec l'invention, notamment le réceptacle qui reçoit le pod, le dispositif d'ouverture/fermeture du réceptacle, le support d'aiguilles de distribution de fluides et le système de déplacement du support d'aiguilles, le réceptacle étant respectivement en position fermée et en position ouverte vis-à-vis du châssis ;
- la figure 3 illustre une vue d'ensemble mettant notamment en évidence la conception du réceptacle, lequel est en position ouverte ;
- la figure 4 illustre une vue d'ensemble mettant en évidence le dispositif d'ouverture/fermeture du réceptacle et le système de déplacement du support d'aiguilles, dans la position ouverte du réceptacle ;
- les figures 5 et 6 illustrent deux vues d'ensemble mettant en évidence le système d'orientation de l'ouverture du réceptacle et le système d'assistance à l'ouverture dudit réceptacle, dans la position ouverte du réceptacle ;
- la figure 7 illustre une vue d'ensemble mettant notamment en évidence le système de déplacement du support d'aiguilles ;
- les figures 8 et 9 illustrent deux vues d'ensemble mettant notamment en évidence le dispositif de verrouillage/déverrouillage du réceptacle, en position de déverrouillage ;
- les figures 10 et 11 illustrent deux vues d'ensemble mettant en évidence le dispositif d'ouverture/fermeture du réceptacle et le système de déplacement du support d'aiguilles, dans la position fermée du réceptacle et dans la position dégagée du support d'aiguilles ;
- la figure 12 illustre une vue d'ensemble mettant en évidence le système d'orientation de l'ouverture du réceptacle et le système d'assistance à l'ouverture dudit réceptacle, dans la position fermée du réceptacle ;
- les figures 13 et 14 illustrent deux vues d'ensemble mettant notamment en évidence le dispositif de verrouillage/déverrouillage du réceptacle, en position de verrouillage ;
- la figure 15 illustre une vue d'ensemble mettant en évidence des éléments du dispositif d'ouverture/fermeture et du système de déplacement du support d'aiguilles, avec le réceptacle en position fermée ;
- la figure 16 illustre une vue d'ensemble mettant notamment en évidence le système de déplacement du support d'aiguilles avec le support d'aiguilles en position dégagée, et le système de verrouillage/déverrouillage du réceptacle en position de verrouillage ;
- les figures 17 et 18 illustrent deux vues d'ensemble mettant en évidence une rampe sur le système de déplacement du support d'aiguilles respectivement en position dégagée et en position engagée ;
- les figures 19 et 20 illustrent deux vues d'ensemble mettant notamment en évidence le système de déplacement du support d'aiguilles en position engagée ;
- la figure 21 illustre une vue d'ensemble mettant en évidence une molette du système de déplacement du support d'aiguilles, dans la position engagée ;
- les figures 22 à 27 mettent en évidence un mode de conception d'un pod ;
- la figure 28 illustre un mode de réalisation des aiguilles.

### Description détaillée

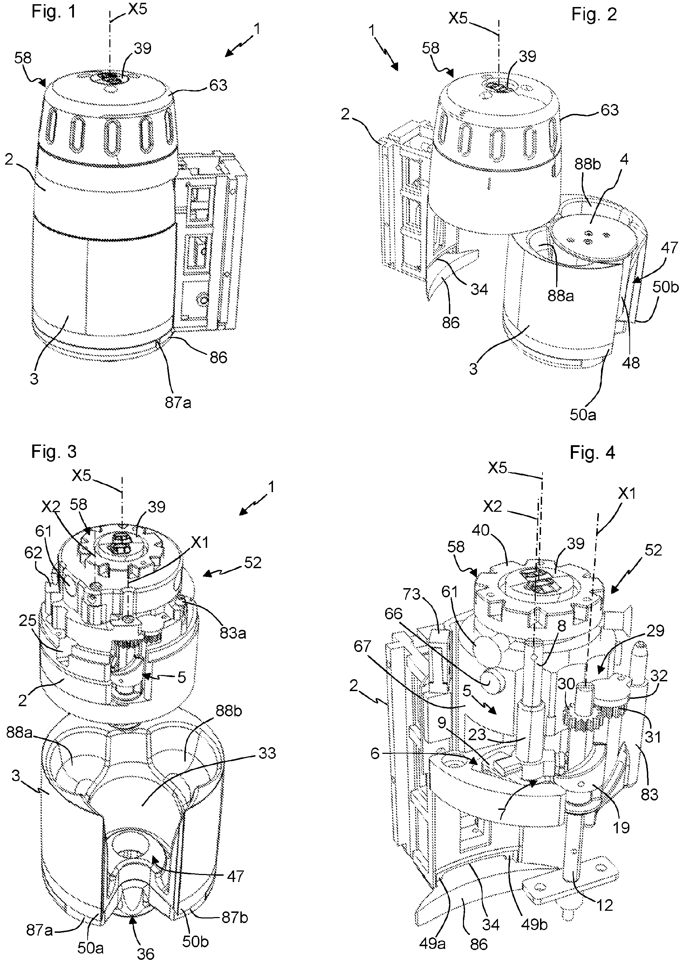

Les figures 1 et 2 illustrent uniquement les parties la machine 1 de distribution mettant en œuvre l'invention. Cette machine 1 comprend d'autres caractéristiques telles qu'un dispositif d'alimentation en fluides et un système de gestion de l'activation de ce dispositif d'alimentation en fluides, lesquels ne sont pas détaillés ci-après, n'étant pas essentiels à la mise en œuvre de l'invention.

La machine 1 comprend un châssis 2 et un réceptacle 3. Le réceptacle 3 permet la réception d'un pod 4. Ce réceptacle 3 est monté en liaison pivot par rapport au châssis 2, selon un premier axe vertical X1 illustré notamment en figures 3 et 4. Le réceptacle 3 peut pivoter d'une position fermée illustrée en figure 1, vers une position ouverte illustrée en figure 2, en effectuant une rotation de 180° selon cet axe vertical X1. Et inversement. Par ailleurs, le sens de la rotation peut être horaire ou antihoraire, au choix de l'utilisateur, comme cela apparaîtra plus en détail ci-après. Pour cela, la machine 1 comprend un dispositif d'ouverture/fermeture 5 agencé entre le châssis 2 et le réceptacle 3, comme illustré par exemple en figures 3, 4, 10, 11, 15 et 19.

Ce dispositif d'ouverture/fermeture 5 comprend un système d'orientation 6 de l'ouverture du réceptacle 3 et un système d'assistance 7 à l'ouverture, illustrés notamment en figures 4, 5, 6, 11 et 12. Le système d'orientation 6 permet d'ouvrir le réceptacle 3 dans le sens inverse de celui de la fermeture qui précède. Le système d'assistance 7 permet d'amener le réceptacle 3 de la position fermée à la position ouverte par un mouvement de rotation à 180°, sans manipulation de la part de l'utilisateur.

Le système d'orientation 6 comprend une tige 8 agencée selon un second axe vertical X2, de manière fixe vis-à-vis du châssis 2. Cette tige 8 reçoit une gâchette 9 montée à pivotement selon le second axe vertical X2 et logée dans un quartier creux 10 d'une pièce 11 qui est fixée au châssis 2. Ainsi, le pivotement de la gâchette 9 selon l'axe vertical X2 est limité par les bords latéraux 10a, 10b du quartier creux 10.

Le système d'assistance 7 comprend un axe 12 agencé selon le premier axe vertical X1. Cet axe 12 est monté en liaison pivot par rapport au châssis 2 selon l'axe vertical X1, et il est assujetti au réceptacle 3. Le système d'orientation 6 comprend une nervure verticale 13 agencée sur l'axe 12 et configurée pour venir en appui contre un nez 14 de la gâchette 9 lors de la rotation de l'axe 12.

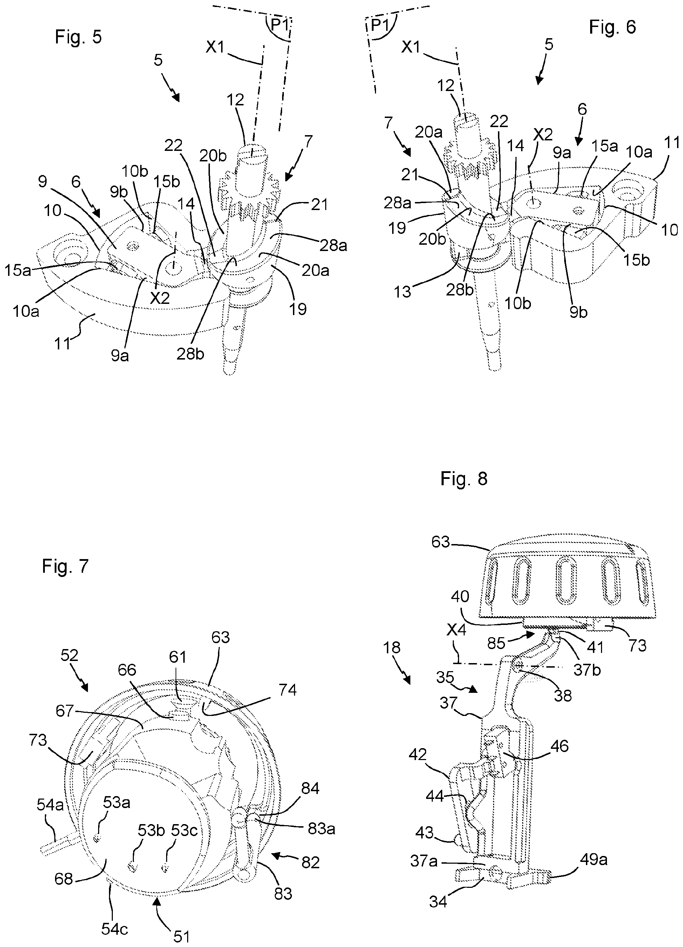

Deux ressorts 15a, 15b, schématisés par des portions de cylindres, sont agencés entre les côtés latéraux 9a, 9b de la gâchette 9 et les bords latéraux 10a, 10b du quartier creux 10, comme l'illustrent notamment les figures 5, 6 et 12. Lorsque le réceptacle 3 est en position ouverte, la nervure verticale 13 est dégagée à l'opposé du nez 14 de la gâchette 9 qui est en position moyenne d'équilibre dans le quartier 10, comme l'illustrent notamment les figures 5 et 6.

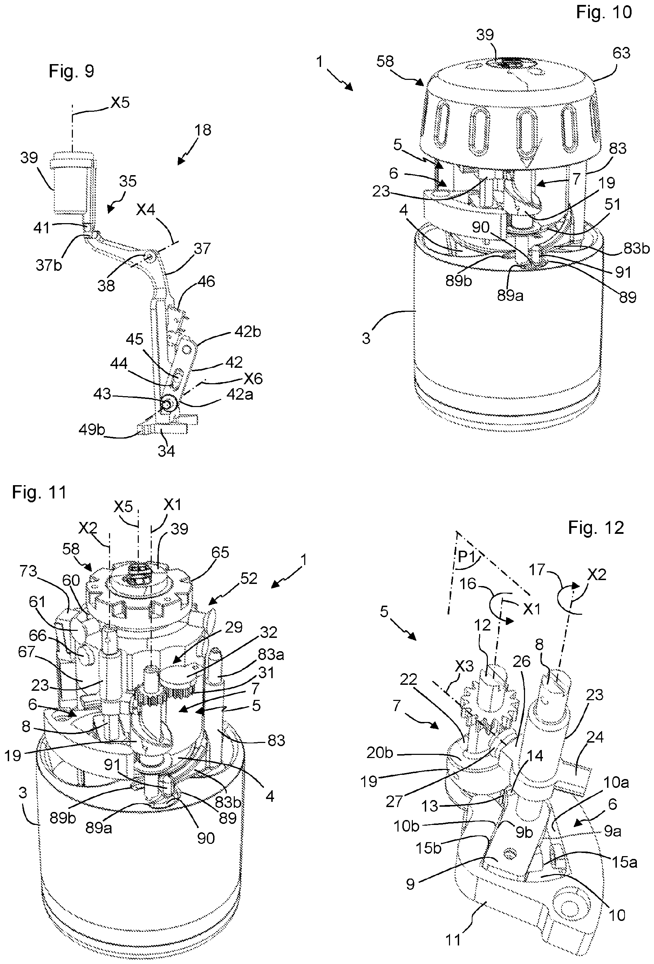

Lors de la fermeture du réceptacle 3 en effectuant une rotation dans le sens antihoraire illustré par la flèche 16 sur la figure 12, l'axe 12 et la nervure verticale 13 tournent selon l'axe vertical X1, ladite nervure verticale 13 venant alors en appui contre le nez 14, ce qui provoque la rotation de la gâchette 9 dans le sens horaire illustré par la flèche 17 sur la figure 12. Le ressort 15b se comprime jusqu'à ce que le côté latéral 9b de la gâchette 9 vienne en butée contre le bord latéral 10b du quartier creux 10, ce qui arrête la rotation du réceptacle 3 dans une position précise de fermeture illustrée en figure 1. Le principe de fonctionnement reste le même et est inversé lorsque le réceptacle 3 est fermé en le tournant dans le sens horaire selon l'axe vertical X1, dans quel cas le côté latéral 9a de la gâchette 9 tourne dans le sens antihoraire et vient en butée contre le bord latéral 10a du quartier creux 10, le ressort 15a étant dans ce cas comprimé. La position d'arrêt de la nervure verticale 13 reste identique lorsqu'elle est en butée sur le nez 14 de la gâchette 9, que le réceptacle 3 soit tourné à 180° dans le sens horaire ou antihoraire lors de la fermeture. Par ailleurs, la présence de cette gâchette 9 venant en butée contre l'un ou l'autre des bords latéraux 10a, 10b du quartier creux 10, en position fermée, impose de procéder à l'ouverture du réceptacle 3 dans le sens inverse à celui de la fermeture qui vient d'être réalisée.

Un système de verrouillage/déverrouillage 18 permet de maintenir le réceptacle 3 en position fermée vis-à-vis du châssis 2 et, inversement, de libérer le réceptacle 3 de sorte à permettre son pivotement en position ouverte. Ce système de verrouillage/déverrouillage 18 sera décrit plus en détail ci-après. Lors du déverrouillage, la libération du réceptacle 3 permet au ressort 15a, 15b qui est à l'état comprimé, de se détendre et de pousser la gâchette 9 pour la faire pivoter dans le sens inverse au sens de la fermeture qui précède. Le nez 14 appuie alors contre la nervure verticale 13, ce qui force l'axe 12 à tourner dans le sens inverse à celui de la fermeture qui précède, permettant ainsi de donner une impulsion au réceptacle 3 et de le dégager de la position de fermeture.

Le système d'assistance 7 comprend une platine 19 assujettie à l'axe 12, cette platine 19 comportant deux rampes 20a, 20b agencées symétriquement par rapport à un plan vertical P1 passant par l'axe vertical X1, comme illustré en figures 5, 6 et 12. Ces rampes 20a, 20b sont inclinées et forment un sommet 21 et un logement 22 à l'opposé dudit sommet 21. Le système d'assistance 7 comprend en outre un organe d'appui 23 de la forme d'un cylindre creux monté à coulissement sur la tige 8 selon le second axe vertical X2. Cet organe d'appui 23 comprend une patte 24 qui est disposée dans un logement 25, comme l'illustrent par exemple les figures 3, 4 et 15. Ce logement 25 assure un blocage en rotation de la patte 24, et ainsi le montage en translation de l'organe d'appui 23 selon l'axe vertical X2. Cet organe d'appui 23 comprend un doigt 26 muni d'un galet 27 monté en rotation selon un axe horizontal X3. Ce galet 27 prend appui sur l'une ou l'autre des rampes 20a, 20b de la platine 19, selon le sens de rotation du réceptacle 3. Un ressort (non illustré) est agencé sur la tige 8 selon l'axe X2 pour exercer une force de rappel vers le bas sur l'organe d'appui 19, ce qui contraint ledit réceptacle 3 à tourner de la position fermée vers la position ouverte, une fois ledit réceptacle 3 libéré par le dispositif de verrouillage/déverrouillage 18. Dans la position fermée, le galet 27 se situe au niveau du sommet 21 sur la platine 19, dans une position d'équilibre. L'impulsion donnée par le système d'impulsion constitué des ressorts 15a, 15b, de la gâchette 9 et de la nervure verticale 13, permet d'engager le galet 27 sur l'une ou l'autre des rampes 20a, 20b selon le sens de rotation, le système d'assistance 7 assurant ensuite l'ouverture complète du réceptacle 3. En position ouverte, le galet 27 est positionné dans le logement 22 sur la platine 19, ce qui assure un maintien convenable et stable du réceptacle 3 dans cette position ouverte.

Tel qu'illustré sur les figures 5, 6 et 12, les rampes 20a, 20b sur la platine 19 comportent chacune au moins deux zones de pentes différentes 28a, 28b permettant d'appliquer deux couples de rotation sur le réceptacle 3 durant son ouverture. Cela permet de réduire les efforts sur le réceptacle 3 en fin d'ouverture de celui-ci. En outre, la machine 1 comprend un système d'amortisseur 29, illustré par exemple en figures 4 et 11, configuré pour amortir le réceptacle 3 lors de sa rotation en position ouverte. Le système d'amortisseur 29 comprend un pignon 30 assujetti à l'axe 12, qui engrène avec une roue dentée 31 assujettie à un amortisseur à huile 32.

La machine 1 comprend un système de verrouillage/déverrouillage 18, illustré notamment en figures 2, 3, 4, 8, 9, 13, 14, 15 et 20, qui permet de maintenir le réceptacle 3 en position fermée vis-à-vis du châssis 2, position dans laquelle la distribution de la boisson peut être réalisée en la présence d'un pod 4 dans une zone de réception 33 dudit réceptacle 3. Le système de verrouillage/déverrouillage 18 comporte un verrou 34 mobile, des moyens de commande 35 du verrou 34, agencés sur le châssis 2, et un logement 36 agencé sur le réceptacle 3, ce logement 36 étant configuré pour recevoir le verrou 34 dans la position fermée du réceptacle 3. Les moyens de commande 35 comportent une bielle 37 dont l'extrémité inférieure 37a est assujettie au verrou 34. La bielle 37 est montée en liaison pivot 38 selon un axe horizontal X4 par rapport au châssis 2. Les moyens de commande 35 comprennent également un bouton de commande 39 monté en translation selon un axe vertical X5 vis-à-vis d'un corps 40. Ce bouton de commande 39 comprend un doigt 41 qui vient en appui sur l'extrémité supérieure 37b de la bielle 37, comme l'illustre la figure 9, dans une position déterminée dudit corps 40, comme cela sera précisé ci-après. Ce doigt 41 est agencé verticalement et désaxé par rapport à l'axe vertical X5 de translation du bouton de commande 39. Une pression sur le bouton de commande 39 permet de descendre le doigt 41 qui appuie sur l'extrémité supérieure 37b de la bielle 37, permettant son pivotement selon l'axe horizontal X4 et, ainsi, le dégagement du verrou 34 hors du logement 36 sur le réceptacle 3, ce qui autorise le pivotement du réceptacle 3 en position ouverte, comme expliqué précédemment. En outre, les moyens de commande 35 comprennent un élément de rappel (non illustré) du verrou 34, du type ressort, qui exerce une force sur le verrou 34 ou/et sur la bielle 37 de sorte à assurer le retour dudit verrou 34 en position de maintien du réceptacle 3.

Tel qu'illustré notamment en regard des figures 2, 3, 4, 8, 9, 13, 14, 16 et 20, une seconde bielle 42 a son extrémité inférieure 42a qui est montée en liaison pivot 43 selon un axe horizontal X6, vis-à-vis du châssis 2. La seconde bielle 42 comprend une lumière 44 s'étendant sur une partie de sa longueur, cette lumière 44 recevant un tenon 45 agencé sur la première bielle 37 assujettie au verrou 34. Un capteur de présence 46, par exemple de type capteur à lamelle, est assujetti à l'extrémité supérieure 42b de la seconde bielle 42. Lors d'une pression sur le bouton de commande 39, l'extrémité inférieure 37a de la première bielle 37 pivote vers l'arrière selon l'axe horizontal X4. Le tenon 45 exerce alors une force sur la seconde bielle 42, permettant le pivotement vers l'arrière du capteur de présence 46 selon l'axe horizontal X6. Lorsque la pression sur le bouton de commande 39 cesse, l'élément de rappel du verrou 34 agit de manière inverse sur la première bielle 37, agissant elle-même sur la seconde bielle 42, ce qui assure le pivotement vers l'avant du capteur de présence 46. Le réceptacle 3 comprend une fente 47 permettant de laisser apparaître une partie du contour 48 du pod 4, en la présence de celui-ci dans la zone de réception 33, comme l'illustrent notamment les figures 2, 3 et 16. Lorsque le capteur de présence 46 est pivoté vers l'arrière, celui-ci est dégagée de la fente 47, ce qui permet de pivoter le réceptacle 3 sans interférer sur le capteur de présence 46. Inversement, lorsque le capteur de présence 46 est pivoté vers l'avant, celui-ci pénètre dans la fente 47 et peut entrer en contact avec la paroi 48 du pod 4 ou venir à proximité de celle-ci, ce qui permet de détecter la présence dudit pod 4 dans la zone de réception 33 du réceptacle 3. Le verrou 34 comprend deux dents 49a, 49b légèrement biseautées qui viennent respectivement en butée contre deux points de contact 50a, 50b sur le réceptacle 3, lors du pivotement dudit réceptacle 3 en position fermée, dans le sens horaire ou, inversement, dans le sens antihoraire. Ainsi, lors de la fermeture du réceptacle 3 en le pivotant dans le sens horaire, le premier point de contact 50a bute contre la première dent 49a. Inversement, lors de la fermeture du réceptacle 3 en le pivotant dans le sens antihoraire, le second point de contact 50b bute contre la seconde dent 49b. La forme biseautée des dents 49a, 49b et la forme circulaire du réceptacle 3 permettent de pousser vers l'arrière le verrou 34 tout en laissant glisser le réceptacle 3 jusque dans sa position fermée. Le déplacement du verrou 34 vers l'arrière assure concomitamment le déplacement du capteur de présence 46, par le biais des bielles 37, 42, ce qui évite tout interférence entre le capteur de présence 46 et le réceptacle 3 durant la fermeture. Une fois le réceptacle 3 en position fermée, l'élément de rappel (non illustré) assure le retour en position du verrou 34 dans le logement 36, et celui du capteur de présence 46 dans la fente 47.

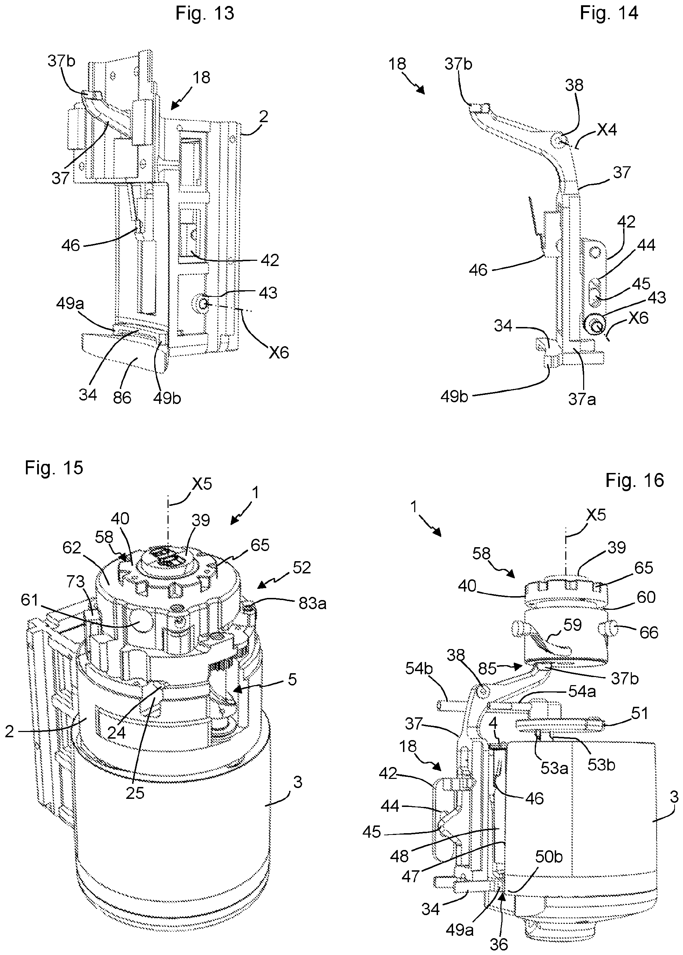

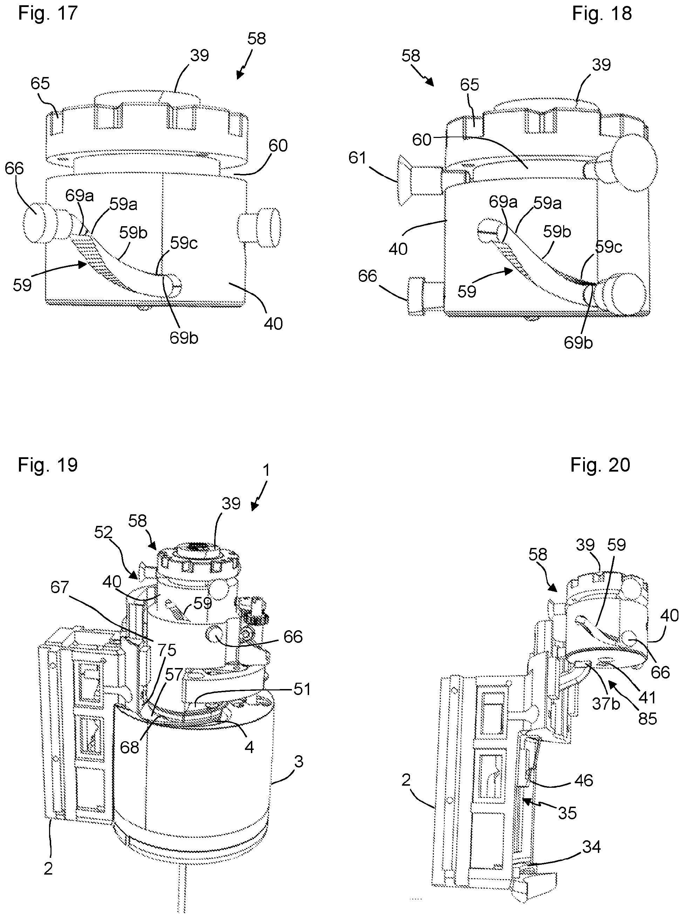

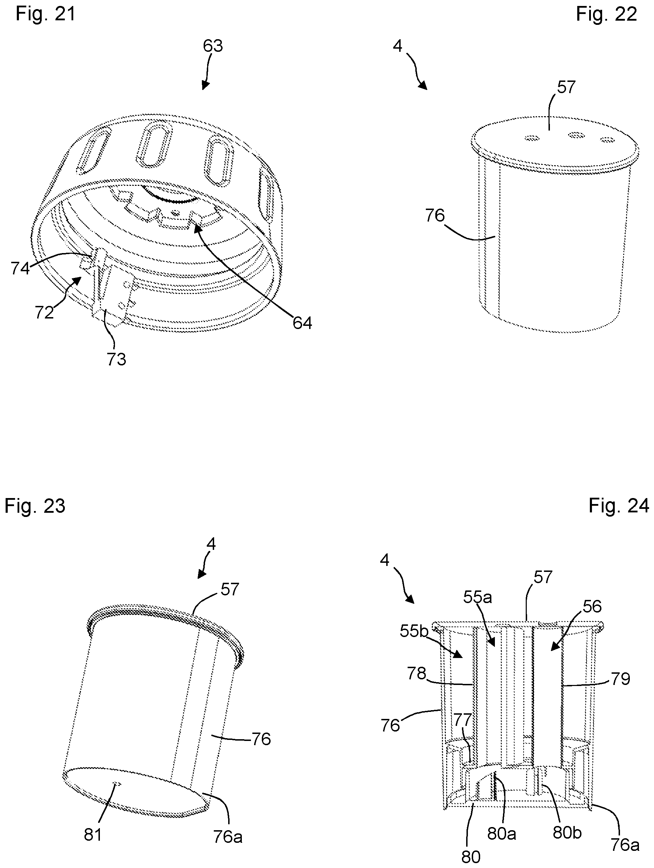

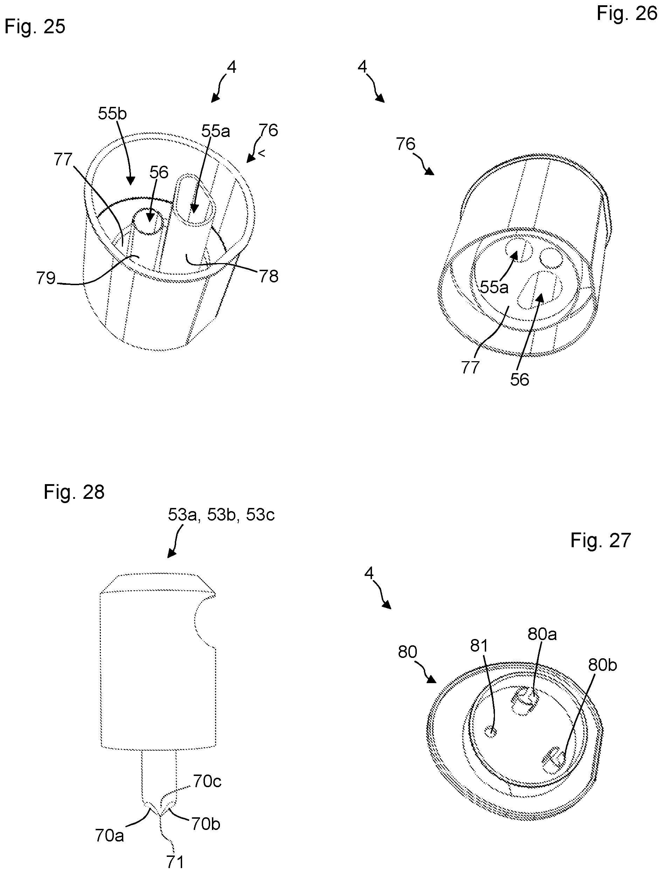

La machine 1 comprend un support d'aiguilles 51 et un système de déplacement 52 du support d'aiguilles 51 d'une position dégagée du pod 4, illustrée en figures 10 et 16, à une position engagée sur le pod 4, illustrée en figure 19. Le support d'aiguilles 51 reçoit trois aiguilles 53a, 53b, 53c connectées à des conduits 54a, 5ab, 54c permettant la distribution de fluides, tel que l'illustrent les figures 7 et 16. Le nombre d'aiguilles et les types de fluides distribués, notamment de l'air ou de l'eau, dépendent de la conception du pod 4. En l'espèce, la machine 1 est configurée pour recevoir un pod 4 qui comprend deux chambres de stockage 55a, 55b contenant chacune un ingrédient (non illustré), et un canal 56 de distribution d'eau, tel qu'illustré en figure 25. Lors du passage de la position dégagée à la position engagée, les aiguilles 53a, 53b, 53c perforent l'opercule 57 du pod 4 illustré en figure 22, et se positionnent respectivement dans les parties supérieures des deux chambres de stockage 55a, 55b et du canal 56.

Le système de déplacement 52 comprend un organe de manœuvre 58 qui comporte le corps 40 précité. Ce corps 40 est muni préférentiellement de trois rampes hélicoïdales 59 uniformément réparties autour de sa paroi cylindrique, pour une meilleure répartition des efforts. Le corps 40 comprend une gorge 60 circulaire qui reçoit trois premiers pions 61 uniformément répartis autour de cette gorge 60 et assujettis à un élément 62 du châssis 2, comme l'illustrent par exemple les figures 15 et 18. Cela permet de monter le corps 40 en liaison pivot selon l'axe vertical X5, vis-à-vis du châssis 2. L'organe de manœuvre 58 comporte également une molette 63 qui comporte une denture femelle 64, illustrée en figure 21, configurée pour coopérer avec une denture mâle 65, illustrée par exemple en figure 15. La rotation de la molette 63 entraîne ainsi celle du corps 40. Le système de déplacement 52 comprend trois seconds pions 66 assujettis à un piston 67 et engagés respectivement dans les trois rampes hélicoïdales 59, tel qu'illustré notamment en figures 11 et 17 à 19. Le piston 67 est assujetti au support d'aiguilles 51 et il est monté en liaison glissière selon l'axe vertical X5. La rotation de la molette 63 entraîne donc celle du corps 40 et, ainsi, le déplacement des rampes hélicoïdales 59 vis-à-vis des seconds pions 66, entraînant alors la translation selon l'axe vertical X5 du piston 67 et du support d'aiguilles 51, vis-à-vis de l'élément 62 du châssis 2. En regard de la forme des rampes hélicoïdales 59 illustrées notamment en figures 17 et 18, une rotation de la molette 63 dans le sens horaire entraîne une translation vers le bas du support d'aiguilles 51, et inversement dans le sens antihoraire.

Tel que l'illustrent les figures 7 et 19, un joint d'étanchéité 68 surfacique est agencé sur la face inférieure du support d'aiguilles 51, lesdites aiguilles 53a, 53b, 53c passant au travers dudit joint d'étanchéité 68. Lorsque le support d'aiguilles 51 est en position engagée sur le pod 4, ce joint d'étanchéité 68 vient convenablement en contact sur la surface de l'opercule 57 du pod 4, ce qui supprime la mise à l'air libre des chambres de stockage 55a, 55b et du canal 56 du pod 4 après perforation de cette opercule 57 par les aiguilles 53a, 53b, 53c et durant l'injection des fluides à l'intérieur dudit pod 4.

Tel qu'illustré notamment en figure 17 et 18, chaque rampe hélicoïdale 59 comporte trois zones de pentes différentes 59a, 59b, 59c. La première zone de pente 59a correspond à une zone d'approche des aiguilles 53a, 53b, 53c au contact de l'opercule 57 du pod 4. Les deux autres zones de pentes 59b, 59c correspondent à deux phases d'une zone de travail où les aiguilles 53a, 53b, 53c sont engagées sur le pod 4. La zone de pente 59b correspond à une première phase de pénétration des aiguilles 53a, 53b, 53c dans l'opercule 57 du pod 4 et la zone de pente 59c correspond à une seconde phase de mise en étanchéité du pod 4 où le joint d'étanchéité 68 sur le support d'aiguilles 51 épouse convenablement l'opercule 57 après sa perforation par lesdites aiguilles 53a, 53b, 53c. Par ailleurs, chaque rampe hélicoïdale 59 comprend deux excroissances 69a, 69b permettant de maintenir le corps 40 en position vis-à-vis du pion 66 dans deux positions extrêmes de rotation, tant qu'une action manuelle n'est pas exercée sur la molette 63. Cela assure un arrêt et un maintien convenable du support d'aiguilles 51 en position engagée et en position dégagée correspondant auxdites positions extrêmes. De préférence, les rampes hélicoïdales 59 sont configurées pour que les pions 66 atteignent les positions extrêmes vis-à-vis du corps 40 en tournant la molette 63 d'un angle compris entre 50° et 90°, de préférence 65°. De préférence, le système de déplacement 52 comprend un ressort (non illustré) agencé entre le piston 67 et l'élément 62 du châssis 2, ce ressort permettant d'assister la descente du piston 67 dans les phases d'approche et de perforation de l'opercule 57 du pod 4.

Les aiguilles 53a, 53b ,53c comportent chacune un affûtage à trois pentes 70a, 70b, 70c permettant de former une pointe 71 à l'extrémité de chaque aiguille, ce qui facilite la perforation de l'opercule 57 avec un couple réduit lors de la rotation de la molette 63. Dans un même but, il est possible de prévoir des longueurs différentes pour les aiguilles 53a, 53b, 53c, ce qui permet de séquencer les entrées en contact desdites aiguilles avec l'opercule 57 du pod 4 et, donc, de séquencer les efforts de perforation dudit opercule. De préférence, les deux aiguilles 53a, 53c excentrées sont de même longueur pour une meilleure stabilité durant la perforation de l'opercule 57.

Tel qu'illustré notamment en figures 7, 15 et 21, la machine 1 comprend un système de détection 72 de la position engagée des aiguilles 53a, 53b, 53c sur l'opercule 57 du pod 4. Ce système de détection 72 comporte un interrupteur 73, de type capteur à lamelle, qui est assujetti à l'élément 62 du châssis 2, et une protubérance 74 agencée à l'intérieur de la molette 63. Le support d'aiguilles 51 atteint la position engagée vis-à-vis du pod 4 en tournant la molette 63 dans le sens horaire jusqu'à ce que les pions 66 dépassent les excroissances 69b sur les rampes hélicoïdales 59, position dans laquelle la protubérance 74 vient en butée contre l'interrupteur 73 et l'active, ce qui permet à la machine 1 de lancer le cycle de distribution des fluides au travers des aiguilles 53a, 53b, 53c en garantissant une parfaite étanchéité entre le support d'aiguilles 51 et le pod 4 et, ainsi, une distribution correcte de la boisson.

En fin de distribution de la boisson, l'utilisateur tourne la molette 63 dans le sens antihoraire jusqu'à ce que les pions 66 dépassent les excroissances 69a sur les rampes hélicoïdales 59, ce qui permet la remontée du piston 67 et du support d'aiguilles 51. Durant cette remontée, le pod 4 pourrait rester collé au support d'aiguilles 51, ce qui pourrait bloquer l'ouverture du réceptacle 3. Afin de garantir le maintien du pod 4 dans la zone de logement 33 du réceptacle 3 durant le dégagement des aiguilles 53a, 53b, 53c, un élément de butée 75 sur le châssis 2 est positionné au-dessus d'une partie de l'opercule 57 du pod 4 dans la position fermée dudit réceptacle 3, comme l'illustre la figure 19.

Tel qu'illustré en figure 22 à 27, le pod 4 comprend un corps 76 comportant une surface intermédiaire 77 et des parois 78, 79 permettant de définir les deux chambres de stockage 55a, 55b et le canal 56.. La surface intermédiaire 77 est recouverte par un film (non représenté sur les figures) de fermeture des deux chambres de stockage 55a, 55b. Le pod 4 comprend également un fond mobile 80 agencé de manière coulissante dans le corps 76, en-dessous de la surface intermédiaire 77. Le fond mobile comprend deux aiguilles 80a, 80b. Durant la mise en place du support d'aiguilles 51 sur l'opercule 57 du pod 4, lorsque les pions 66 se situent dans la zone de travail sur les rampes hélicoïdales 59, le fond mobile 80 coulisse dans le corps 76 du pod 4 jusqu'à atteindre la surface intermédiaire 77. Les aiguilles 80a, 80b perforent le film, ce qui permet l'activation du pod 4 et la constitution d'une chambre de mélange (non illustrée). Cette chambre de mélange communique avec les deux chambres 55a, 55b et le canal 56, ce qui permet de distribuer les ingrédients et l'eau dans cette chambre de mélange lors de la distribution des fluides pour la préparation de la boisson, laquelle s'écoule progressivement au travers d'un orifice de sortie 81 agencé dans le fond mobile 80. D'autres conceptions de pod 4 sont envisageables, le principe de déplacement du support d'aiguilles 51 de la position dégagée à la position engagée sur le pod 4 grâce au système de déplacement 52 précité, restant identique.

Lorsque le réceptacle 3 est ouvert pour la mise en place d'un pod 4 ou le retrait d'un pod 4 usagé, il convient d'éviter tout déplacement du support d'aiguilles 51 vers la position engagée, afin que le réceptacle 3 ne vienne pas heurter le support d'aiguilles 51 lors de la fermeture suivante, ce qui pourrait endommager la machine 1. Pour cela, la machine 1 comprend un système de blocage 82 du système de déplacement 52, illustré en regard des figures 3, 7, 11 et 15. Le système de blocage 82 comprend une pièce de blocage 83 montée en liaison glissière vis-à-vis de l'élément 62 du châssis 2 de sorte à coulisser d'une position escamotée illustrée en figure 15 où la tête 83a de la pièce de blocage 83 est logée dans l'élément 62 du châssis2, à une position active illustrée en figures 3 et 7 où la tête 83a de la pièce de blocage 83 dépasse de l'élément 62 du châssis 2 et vient s'engager dans un orifice 84 agencé dans le fond de la molette 63, ce qui bloque la rotation de cette molette 63, empêchant alors l'activation du système de déplacement 52 qui maintient le support d'aiguilles 51 en position dégagée. La translation de la pièce de blocage 83 est obtenue grâce à une rainure circulaire 89 agencée sur le réceptacle 3, cette rainure circulaire 89 comprenant un fond incurvé 90 dans lequel vient se loger un pied 91 agencé à l'extrémité inférieure 83b de la pièce de blocage 83. Lorsque le réceptacle 3 est pivoté en position fermée, le pied 91 est logé dans le creux du fond incurvé 90, en partie centrale de la rainure circulaire 89, comme illustré en figures 10 et 11, position dans laquelle la tête 83a de la pièce de blocage est dégagée de l'orifice 84. Au contraire, lorsque le réceptacle 3 est en position ouverte par un pivotement dans le sens horaire ou antihoraire, le pied 90 est situé sur l'un des bords 89a, 89b de la rainure circulaire 89, dans la partie la moins profonde du fond incurvée 90, position dans laquelle la tête 83a est engagée dans l'orifice 84.

Lorsque le support d'aiguilles 51 est engagé sur le pod 4 pour la distribution d'une boisson, il convient d'éviter toute possibilité d'ouverture du réceptacle 3, ce qui pourrait également endommager la machine 1. A cet effet, la machine 1 comprend un système de désactivation 85 du système de verrouillage/déverrouillage 18 empêchant le dégagement du verrou 34 hors du logement 36 sur le réceptacle 3. Ce système de désactivation 85 est mise en œuvre au moyen du bouton de commande 39 monté en liaison glissière vis-à-vis du corps 40 de l'organe de manœuvre 58, ledit corps étant monté rotatif selon l'axe vertical X5. Le doigt 41 sur le bouton de commande 39 est désaxé par rapport à l'axe vertical X5. Lorsque la molette 63 est dans une position selon laquelle les pions 66 sont disposés en butée dans les rampes hélicoïdales 59, au niveau des excroissances 69a, le support d'aiguilles 51 est dégagé du pod 4 et le doigt 41 correspond avec l'extrémité supérieure 37b de la bielle 37, tel qu'illustré en figures 8, 9 et 16, ce qui permet le déverrouillage du verrou 34 en appuyant sur le bouton de commande 39, pour l'ouverture du réceptacle 3. Dès que la molette 63 est tournée et que les pions 66 quittent les excroissances 69a pour se déplacer dans la zone d'approche et dans la zone de travail sur les rampes hélicoïdales 59, le doigt 41 se dégage de l'extrémité supérieure 37b de la bielle 37, ce qui empêche l'activation de la bielle 37 et le dégagement du verrou 34 lorsque l'on appuie sur le bouton de commande 39.

Tel qu'illustré notamment sur les figures 1 à 4, le châssis 2 de la machine 1 comprend une patte d'appui 86 en forme de portion cylindrique. La partie inférieure 3a du réceptacle 3 comporte deux épaulements 87a, 87b qui viennent se positionner au-dessus de la patte d'appui 86 lorsque ledit réceptacle 3 est en position fermée. Lors d'un déplacement du support d'aiguilles 51 de la position dégagée vers la position engagée sur le pod 4, ces deux épaulements 87a, 87b prennent appui sur la patte d'appui 86, ce qui assure une reprise des efforts durant l'engagement du support d'aiguilles 51 sur le pod 4.

Tel qu'illustré notamment sur les figures 2 et 3, le réceptacle 3 comprend deux évidements 88a, 88b disposés de chaque côté de la zone de réception 33 du pod 4, ce qui facilite la mise en place du pod 4 dans ladite zone de réception 33, et inversement son retrait. Dans le même but, la fente 47 facilite également la manipulation du pod 4 lors de son positionnement dans le réceptacle 3 ou de son retrait de celui-ci.

Le réceptacle 3 comprend également une pièce de support (non illustrée) recevant le pod 4, cette pièce de support étant configurée pour être logée de manière amovible dans la zone de réception 33, afin de permettre son retrait et de faciliter le nettoyage dudit réceptacle 3.

La machine 1 comprend également un système de lecture (non illustré), par exemple un lecteur de code-barres, qui est agencé sur le châssis 2 ou sur la seconde bielle 42, de sorte à être positionné en regard de la fente 47 sur le réceptacle 3 disposé en position fermée et à permettre la lecture d'un code graphique agencé sur la partie du contour 48 du pod 4 apparaissant au niveau de la fente 47. Cela permet à la machine 1 de reconnaître le type de pod 4 disposé dans le réceptacle 3 et la boisson à préparer, afin de commander la distribution des fluides en conséquence. Lorsque le capteur de présence 46 indique la présence d'un pod 4 dans le réceptacle 3 en position fermée, que l'interrupteur 73 indique que le support d'aiguilles 51 est en position engagée sur le pod 4, et que le système de lecture a reconnu le type de pod 4 disposé dans le réceptacle, le système de gestion de l'activation (non illustré) de la machine 1 commande le dispositif de distribution de fluides afin de délivrer les quantités de fluides nécessaires à la préparation de la boisson. Ce système de lecture peut également remplir la fonction du capteur de présence 46, puisque la lecture du code graphique indique systématiquement la présence d'un pod 4 dans la zone de réception 33 du réceptacle 3.

La description qui précède n'a aucun caractère limitatif, de nombreuses variantes pouvant être envisagées sans sortir du cadre de l'invention. On pourra par exemple prévoir des variantes de mise en œuvre du système de déplacement 52 du support d'aiguilles 51. Par exemple, on peut prévoir une inversion du sens des rampes 59 sur le corps 40 de l'organe de manœuvre 58, pour le déplacement du support d'aiguilles 51 de la position dégagée vers la position engagée sur le pod 4, et inversement. Dans ce cas, le sens de rotation de la molette 63 sera inversé. On peut également prévoir des aiguilles 53a, 53b, 53c de longueurs identiques et entrant en contact simultanément avec l'opercule 57 du pod 4.

On peut aussi prévoir un nombre d'aiguilles différent, selon le type de pod 4 pouvant être utilisé pour la préparation de boissons.

Dans un mode de réalisation, la machine 1 permet la préparation de boissons froides. On peut cependant envisager des variantes de réalisation pour la préparation de boissons chaudes, la machine 1 étant dans ce cas équipée d'un dispositif de production d'eau chaude chauffant l'eau préalablement à sa distribution.

## Revendications

1. Machine (1) de distribution de boissons à partir d'un pod (4), comprenant un châssis (2), un réceptacle (3) comportant une zone de réception (33) du pod, un support d'aiguilles (51) de distribution de fluides et un système de déplacement (52) du support d'aiguilles d'une position dégagée du pod à une position engagée sur le pod, le système de déplacement comprenant un organe de manœuvre (58) monté en rotation selon un axe vertical (X5) sur le châssis, **caractérisée en ce que** l'organe de manœuvre comportant un corps (40) muni d'au moins une rampe hélicoïdale (59) qui coopère avec au moins un pion (66) assujetti à un piston (67), le piston étant assujetti au support d'aiguilles et monté en translation selon l'axe vertical (X5), ladite au moins une rampe hélicoïdale comportant au moins deux zones de pentes différentes (59a, 59b, 59c) configurées pour correspondre respectivement à une zone d'approche des aiguilles au contact du pod et à une zone de travail où les aiguilles sont engagées sur le pod.

2. Machine (1) selon la revendication 1, dans laquelle l'organe de manœuvre (58) comporte une molette (63).

3. Machine (1) selon l'une des revendications précédentes, dans laquelle la zone de travail est configurée pour comporter une première phase de pénétration des aiguilles (53a, 53b, 53c) dans le pod (4) et une seconde phase de mise en étanchéité du pod au moyen d'un joint d'étanchéité (68) agencé sur le support d'aiguilles (51).

4. Machine (1) selon la revendication 3, dans laquelle le joint d'étanchéité (68) est surfacique sur le support d'aiguilles (51), lesdites aiguilles (53a, 53b, 53c) passant au travers du joint d'étanchéité.

5. Machine (1) selon l'une des revendications précédentes, dans laquelle l'au moins une rampe (59) comprend deux excroissances (69a, 69b) d'arrêt aux positions extrêmes de rotation de l'organe de manœuvre (58).

6. Machine (1) selon l'une des revendications précédentes, dans laquelle l'au moins une rampe (59) est configurée pour que le déplacement du support d'aiguilles (51) de la position dégagée à la position engagée, et inversement, s'effectue en tournant l'organe de manœuvre (58) d'un angle compris entre 50° et 90°, de préférence 65°.

7. Machine (1) selon l'une des revendications précédentes, dans laquelle le corps (40) comprend trois rampes (59) uniformément réparties.

8. Machine (1) selon l'une des revendications précédentes, dans laquelle le système de déplacement (52) comprend des moyens d'assistance à la descente du piston (67).

9. Machine (1) selon la revendication 8, dans laquelle les moyens d'assistance à la descente du piston (67) comportent un ressort.

10. Machine (1) selon l'une des revendications précédentes, laquelle comprend un système de détection (72) de la position engagée des aiguilles (53a, 53b, 53c) sur le pod (4).

11. Machine (1) selon la revendication 10, dans laquelle ledit système de détection (72) comporte un interrupteur (73).

12. Machine (1) selon l'une des revendications précédentes, dans laquelle les aiguilles 53a, 53b, 53c) comportent chacune un affûtage à trois pentes (70a, 70b, 70c).

13. Machine (1) selon l'une des revendications précédentes, dans laquelle les aiguilles 53a, 53b, 53c) comportent au moins deux longueurs différentes.

14. Machine (1) selon l'une des revendications précédentes, laquelle comprend des moyens de butée (75) contre le pod (4) en position fermée du réceptacle (3) vis-à-vis du châssis (2), configurés pour garantir le maintien du pod en position dans le réceptacle durant le dégagement du support d'aiguilles (51).

15. Machine (1) selon l'une des revendications précédentes, laquelle comprend un dispositif d'ouverture/fermeture (5) agencé entre le châssis (2) et le réceptacle (3) pour pivoter le réceptacle (3) selon un axe vertical (X1) entre une position fermée permettant la distribution et une position ouverte permettant l'accès audit réceptacle, et un système de verrouillage/déverrouillage (18) configuré pour maintenir le réceptacle (3) en position fermée vis-à-vis du châssis et, inversement, pour libérer le réceptacle (3) de sorte à permettre son pivotement en position ouverte.

16. Machine (1) selon la revendication 15, laquelle comprend un système de désactivation (85) du système de verrouillage/déverrouillage (18) configuré pour empêcher l'activation dudit système de verrouillage/déverrouillage tant que le système de déplacement (52) du support d'aiguilles (51) est en position engagée sur le pod (4).

17. Machine (1) selon l'une des revendications 15 ou 16, laquelle comprend un système de blocage (82) du système de déplacement (52) configuré pour maintenir le support d'aiguilles (51) en position dégagée du pod (4) tant que le réceptacle (3) n'est pas revenu en position fermée.

18. Machine (1) selon l'une des revendications précédentes, laquelle comprend des moyens de reprise des efforts (86, 87a, 87b) agencés entre le châssis (2) et le réceptacle (3), configurés pour stabiliser le réceptacle en cours de fonctionnement de la machine.

## Patentansprüche

1. Maschine (1) zum Abgeben von Getränken ausgehend von einer Kapsel (4), die ein Chassis (2), eine Aufnahme (3), die eine Aufnahmezone (33) der Kapsel umfasst, einen Nadelhalter (51) zum Verteilen von Fluiden und ein Verlagerungssystem (52) des Nadelhalters von einer Position, die von der Kapsel ausgerückt ist, zu einer Position, die auf der Kapsel eingerückt ist, umfasst, wobei das Verlagerungssystem ein Betätigungsorgan (58) umfasst, das in Drehung auf einer vertikalen Achse (X5) auf dem Chassis montiert ist, **dadurch gekennzeichnet, dass** das Betätigungsorgan einen Körper (40) umfasst, der mit mindestens einer schraubenförmigen Rampe (59) versehen ist, die mit mindestens einem Stift (66) zusammenwirkt, der von einem Kolben (67) abhängig ist, wobei der Kolben von dem Nadelhalter abhängig ist und in Verschiebung entlang der vertikalen Achse (X5) montiert ist, wobei die mindestens eine schraubenförmige Rampe mindestens zwei Zonen mit unterschiedlichen Neigungen (59a, 59b, 59c) umfasst, die konfiguriert sind, um jeweils einer Annäherungszone der Nadeln zu der Berührung der Kapsel zu entsprechen, und einer Arbeitszone, wo die Nadeln auf der Kapsel einrücken.

2. Maschine (1) nach Anspruch 1, wobei das Betätigungsorgan (58) ein Rändelrad (63) umfasst.

3. Maschine (1) nach einem der vorstehenden Ansprüche, wobei die Arbeitszone konfiguriert ist, um eine erste Eindringphase der Nadeln (53a, 53b, 53c) in die Kapsel (4) zu umfassen, und eine zweite Phase des Abdichtens der Kapsel mittels einer Dichtung (68), die auf dem Nadelhalter (51) eingerichtet ist.

4. Maschine (1) nach Anspruch 3, wobei die Dichtung (68) auf dem Nadelhalter (51) oberflächlich ist, wobei die Nadeln (53a, 53b, 53c) durch die Dichtung hindurchgehen.

5. Maschine (1) nach einem der vorstehenden Ansprüche, wobei mindestens eine Rampe (59) zwei Ausstülpungen (69a, 69b) zum Stoppen des Betätigungsorgans (58) an den Drehungsendpositionen umfasst.

6. Maschine (1) nach einem der vorstehenden Ansprüche, wobei die mindestens eine Rampe (59) konfiguriert ist, damit die Verlagerung des Nadelhalters (51) von der ausgerückten Position zu der eingerückten Position konfiguriert ist, und umgekehrt durch Drehen des Betätigungsorgans (58) um einen Winkel zwischen 50° und 90°, bevorzugt 65°, erfolgt.

7. Maschine (1) nach einem der vorstehenden Ansprüche, wobei der Körper (40) drei gleichmäßig verteilte Rampen (59) umfasst.

8. Maschine (1) nach einem der vorstehenden Ansprüche, wobei das Verlagerungssystem (52) Mittel zum Unterstützen des Senkens des Kolbens (67) umfasst.

9. Maschine (1) nach Anspruch 8, wobei die Mittel zum Unterstützen des Senkens des Kolbens (67) eine Feder umfassen.

10. Maschine (1) nach einem der vorstehenden Ansprüche, die ein Erfassungssystem (72) der auf der Kapsel (4) eingerückten Position der Nadeln (53a, 53b, 53c) umfasst.

11. Maschine (1) nach Anspruch 10, wobei das Erfassungssystem (72) einen Schalter (73) umfasst.

12. Maschine (1) nach einem der vorstehenden Ansprüche, wobei die Nadeln 53a, 53b, 53c) jeweils einen Schliff mit drei Neigungen (70a, 70b, 70c) umfassen.

13. Maschine (1) nach einem der vorstehenden Ansprüche, wobei die Nadeln 53a, 53b, 53c) mindestens zwei unterschiedliche Längen umfassen.

14. Maschine (1) nach einem der vorstehenden Ansprüche, die Mittel (75) zum Anschlagen gegen die Kapsel (4) in geschlossener Position der Aufnahme (3) gegenüber dem Chassis (2) umfasst, die konfiguriert sind, um das Halten der Kapsel in Position in der Aufnahme während des Ausrückens des Nadelhalters (51) zu garantieren.

15. Maschine (1) nach einem der vorstehenden Ansprüche, die eine Öffnungs-/Schließvorrichtung (5) umfasst, die zwischen dem Chassis (2) und der Aufnahme (3) eingerichtet ist, um die Aufnahme (3) entlang einer vertikalen Achse (X1) zwischen einer geschlossenen Position, die das Abgeben erlaubt, und einer offenen Position, die den Zugang zu der Aufnahme erlaubt, zu schwenken, und ein Verriegelungs-/Entriegelungssystem (18), das konfiguriert ist, um die Aufnahme (3) in geschlossener Position gegenüber dem Chassis zu halten und, umgekehrt, um die Aufnahme (3) derart freizugeben, dass ihr Schwenken in offene Positionen erlaubt wird.

16. Maschine (1) nach Anspruch 15, die ein Deaktivierungssystem (85) des Verriegelungs-/Entriegelungssystems (18) umfasst, das konfiguriert ist, um das Aktivieren des Verriegelungs-/Entriegelungssystems zu verhindern, solange das Verlagerungssystem (52) des Nadelhalters (51) in auf der Kapsel (4) eingerückter Position ist.

17. Maschine (1) nach einem der Ansprüche 15 oder 16, die ein Blockierungssystem (82) des Verlagerungssystems (52) umfasst, das konfiguriert ist, um den Nadelhalter (51) von der Kapsel (4) ausgerückt zu halten, solange die Aufnahme (3) nicht in geschlossene Position zurückgekehrt ist.

18. Maschine (1) nach einem der vorstehenden Ansprüche, die Mittel zur Aufnahme der Kräfte (86, 87a, 87b) umfasst, die zwischen dem Chassis (2) und der Aufnahme (3) eingerichtet sind, die konfiguriert sind, um die Aufnahme im Laufe des Betriebs der Maschine zu stabilisieren.

## Claims

1. Machine (1) for dispensing drinks from a pod (4), comprising a chassis (2), a container (3) comprising a zone for receiving (33) a pod, a needle support (51) for dispensing fluids and a system for moving (52) the needle support from an offset position of the pod to an engage position on the pod, the movement system comprising a moving member (58) mounted in rotation about a vertical axis (X5) on the chassis, **characterised in that** the moving member comprising a body (40) equipped with at least one helicoidal rail (59) which engages with at least one pin (66) subservient to a piston (67), the piston being subservient to the needle support and mounted in translation about the vertical axis (X5), said at least one helicoidal rail comprising at least two different sloping zones (59a, 59b, 59c) configured to correspond respectively to a needle approach zone in contact with the pod and to a working zone where the needles are engaged on the pod.

2. Machine (1) according to claim 1, wherein the moving member (58) comprises a roller (63).

3. Machine (1) according to one of the preceding claims, wherein the working zone is configured to comprise a first phase of penetrating needles (53a, 53b, 53c) in the pod (4) and a second phase of sealing the pod by means of a seal (68) arranged on the needle support (51).

4. Machine (1) according to claim 3, wherein the seal (68) is a surface seal on the needle support (51), said needles (53a, 53b, 53c) passing through the seal.

5. Machine (1) according to one of the preceding claims, wherein the at least one rail (59) comprises two stopping protrusions (69a, 69b) in the extreme rotation positions of the moving member (58).

6. Machine (1) according to one of the preceding claims, wherein the at least one rail (59) is configured such that the movement of the needle support (51) from the offset position to the engaged position, and vice versa, is carried out by rotating the moving member (58) by an angle of between 50° and 90°, preferably 65°.

7. Machine (1) according to one of the preceding claims, wherein the body (40) comprises three evenly distributed rails (59).

8. Machine (1) according to one of the preceding claims, wherein the movement system (52) comprises means for assisting with the descent of the piston (67).

9. Machine (1) according to claim 8, wherein the means for assisting with the descent of the piston (67) comprise a spring.

10. Machine (1) according to one of the preceding claims, which comprises a system for detecting (72) the engaged position of the needles (53a, 53b, 53c) on the pod (4).

11. Machine (1) according to claim 10, wherein said detection system (72) comprises a switch (73).

12. Machine (1) according to one of the preceding claims, wherein the needles (53a, 53b, 53c) each comprise a three-slope grinding (70a, 70b, 70c).

13. Machine (1) according to one of the preceding claims, wherein the needles (53a, 53b, 53c) comprise at least two different lengths.

14. Machine (1) according to one of the preceding claims, which comprises abutment means (75) against the pod (4) in the closed position of the container (3) opposite the chassis (2), configured to guarantee the holding of the pod in position in the container during the release of the needle support (51).

15. Machine (1) according to one of the preceding claims, which comprises an opening/closing device (5) arranged between the chassis (2) and the container (3) to pivot the container (3) about a vertical axis (X1) between a closed position making it possible for the dispensing, and an open position making it possible for access to said container, and a locking/unlocking system (18) configured to hold the container (3) in the closed position opposite the chassis and, conversely, to release the container (3) so as to make it possible for the pivoting thereof in the open position.

16. Machine (1) according to claim 15, which comprises a system for deactivating (85) the locking/unlocking system (18) configured to prevent the activation of said locking/unlocking system as long as the system for moving (52) the needle support (51) is in the engaged position on the pod (4).

17. Machine (1) according to one of claims 15 or 16, which comprises a system for blocking (82) the movement system (52) configured to hold the needle support (51) in the offset position of the pod (4) as long as the container (3) does not come back into the closed position.

18. Machine (1) according to one of the preceding claims, which comprises means for resuming forces (86, 87a, 87b) arranged between the chassis (2) and the container (3), configured to stabilise the container during the operation of the machine.
